Europäisches Patentamt

(19) European Patent Office

Office européen des brevets

(11) Numéro de publication : **0 023 456**
**B1**

(12) **FASCICULE DE BREVET EUROPÉEN**

(45) Date de publication du fascicule du brevet :
**14.09.83**

(21) Numéro de dépôt : **80401097.3**

(22) Date de dépôt : **23.07.80**

(51) Int. Cl.³ : **G 01 N 27/72**

(54) **Procédé et dispositif de contrôle non destructif par courants de Foucault pour la détection de zones carburées.**

(30) Priorité : **26.07.79 FR 7919331**

(43) Date de publication de la demande :
**04.02.81 Bulletin 81/05**

(45) Mention de la délivrance du brevet :
**14.09.83 Bulletin 83/37**

(84) Etats contractants désignés :
**BE DE FR GB IT NL SE**

(56) Documents cités :
**DE A 2 622 490**
**GB A 936 033**
**US A 2 258 837**
**US A 3 913 009**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **David, Bernard ·**
**178, Avenue du Général Leclerc**
**F-91190 Gif sur Yvette (FR)**
Inventeur : **Pigeon, Michel**
**14, Avenue du Maréchal Foch**
**F-91440 Bures sur Yvette (FR)**

(74) Mandataire : **Mongrédien, André et al**
**c/o BREVATOME 25, rue de Ponthieu**
**F-75008 Paris (FR)**

Procédé et dispositif de contrôle non destructif par courants de Foucault pour la détection de zones
carburées

La présente invention a pour objet un procédé de contrôle non destructif par courants de Foucault pour la détection de zones carburées dans des pièces à contrôler et un dispositif mettant en œuvre ce procédé.

On sait que le contrôle par courants de Foucault consiste dans l'étude des variations de courants induits dans une pièce métallique par le champ magnétique d'une bobine parcourue par un courant d'excitation alternatif. De tels courants produisent, en retour, un champ qui s'oppose au champ inducteur et par suite, modifient l'impédance de la bobine d'excitation. Cette bobine est disposée dans une sonde qui se déplace le long de la pièce à contrôler. Tout défaut de la pièce examinée, qui se présente au niveau de la sonde (changement de dimension, variation de conductivité électrique, crique, etc...) modifie le parcours ou l'intensité des courants de Foucault et, corrélativement, l'impédance de la bobine.

Une sonde absolue est généralement constituée d'une bobine de mesure alimentée en opposition avec un enroulement de référence. La bobine de mesure et l'enroulement de référence sont placés dans les deux branches adjacentes d'un pont de mesure. La pièce à contrôler est mise en présence de la bobine de mesure de sorte que le passage d'un défaut dans le champ de la sonde déséquilibre ce pont. La tension de déséquilibre du pont est amplifiée et représentée soit sur l'écran d'un tube cathodique, soit sur un enregistreur dont la trace permet de déceler les défauts de la pièce à contrôler.

Le brevet US-A 2 258 837 décrit un procédé de contrôle non destructif qui utilise un champ magnétique auxiliaire de saturation superposé à un champ d'excitation alternatif. Cette technique s'applique à des pièces magnétiques et suppose des champs très intenses de l'ordre de 4 à 5 000 Gauss.

Par ailleurs, le brevet US-A-3 913 009 décrit un procédé et un dispositif dans lesquels on applique à des électrodes constituées d'une poudre ferromagnétique disposée dans une enveloppe un champ magnétique alternatif et un champ magnétique continu pouvant prendre deux valeurs. Le signal de mesure dépend de la quantité de poudre et de l'enveloppe. Les deux signaux de mesure obtenus permettent par un traitement approprié, d'extraire l'information concernant la quantité de poudre ferromagnétique et d'éliminer la part due à l'enveloppe. Une telle technique n'est possible que si la pièce est magnétique et ne conviendrait donc pas au contrôle de tubes non magnétiques. Elle suppose par ailleurs l'élimination de la contribution d'un des éléments de la pièce à contrôler, en l'occurrence la contribution de l'enveloppe, ce qui n'est pas le cas dans le contrôle envisagé dans l'invention.

Enfin, le document DE-A-2 622 490 décrit une technique de contrôle non destructif de pièces, dans laquelle ces pièces sont soumises à deux champs magnétiques alternatifs de fréquences différentes. Là encore il s'agit de pièces magnétiques.

Aucune de ces techniques ne peut donc être appliquée telle quelle à une pièce non magnétique et encore moins pour détecter, dans de telles pièces, la présence de zones de faible étendue présentant, elles, un caractère magnétique, ce problème étant en dehors du champ des techniques connues.

La présente invention perfectionne ces procédé et dispositif en permettant la détection des zones carburées dans une pièce non magnétique. A cette fin, on superpose au champ d'excitation un champ apte à provoquer la saturation magnétique d'une zone carburée, si elle existe, dans la pièce traversant l'enroulement de mesure. Dans ces conditions, le signal délivré par la sonde est ramené à celui qui serait délivré en l'absence de zone carburée. Pour mettre en évidence cet effacement du signal de carburation par la saturation, le courant de saturation est périodiquement interrompu, ce qui ramène le signal de mesure à la valeur qui tient compte de la carburation. De cette manière, l'écart entre les deux valeurs du signal enregistré peut bien être attribué à la présence d'une zone carburée et non à une variation dans les caractéristiques de la pièce. Naturellement la fréquence d'interruption et de rétablissement du courant de saturation doit tenir compte de la vitesse de défilement de la pièce contrôlée. En pratique, cette fréquence est inférieure à 1 kHz et plus généralement voisine de quelques dizaines de Hertz.

Il résulte de cette manière de procéder que le champ magnétique utilisé dans l'invention est d'intensité beaucoup plus faible que ceux de l'art antérieur, puisque son rôle consiste à saturer des zones de petites dimensions (les carburations éventuelles) alors que dans l'art antérieur mentionné, le rôle du champ est d'aimanter la totalité de la pièce à contrôler. C'est ainsi qu'on peut utiliser, dans l'invention un champ de quelques dizaines de gauss (de manière générale un champ inférieur à 50 G) alors que dans l'art antérieur il est nécessaire d'employer des champs de 4 à 5 000 G, soit 100 fois plus. Cette différence fondamentale entraîne que la sonde de l'invention peut fort bien être de petite taille et par conséquent être introduite dans des tubes à contrôler alors que dans l'art antérieur les enroulements producteurs de champ sont si importants qu'ils ne peuvent être disposés qu'à l'extérieur des tubes à contrôler.

De façon précise, la présente invention a pour objet un procédé de contrôle non destructif de pièces par courants de Foucault, dans lequel on soumet une pièce à un premier champ magnétique alternatif obtenu en alimentant une sonde à enroulements par un courant d'excitation alternatif ayant une certaine fréquence et en disposant cette sonde à proximité de la pièce, on soumet ladite pièce à un second champ magnétique continu prenant alternativement deux valeurs différentes avec une fréquence qui est inférieure à la fréquence du courant d'excitation, on mesure la tension délivrée par la sonde et on détecte les deux valeurs différentes que prend cette tension pour les deux valeurs différentes du champ magnétique continu, caractérisé en ce qu'on applique ce procédé à la détection de zones carburées dans des pièces non magnétiques, les deux valeurs du champ magnétique continu étant égales l'une à une valeur nulle et l'autre à une valeur apte à provoquer la saturation magnétique d'une zone carburée, en ce qu'on déplace la sonde le long de la pièce à contrôler et en ce qu'on fait apparaître les deux valeurs différentes que prend la tension de mesure pour la valeur nulle et la valeur de saturation du second champ, ce qui permet de détecter la présence d'une zone carburée dans la pièce contrôlée.

L'invention a également pour objet un dispositif pour la mise en œuvre d'un tel procédé, ce dispositif comprenant une sonde à enroulements disposée à proximité de la pièce, un circuit d'alimentation de cette sonde en courant d'excitation alternatif ayant une certaine fréquence, la pièce étant ainsi soumise à un premier champ magnétique alternatif, un générateur de courant délivrant un courant pouvant prendre alternativement deux valeurs différentes avec une fréquence inférieure à la fréquence du courant d'excitation, ce générateur étant relié à la sonde et permettant d'appliquer à la pièce un champ magnétique continu prenant alternativement deux valeurs différentes, un circuit de mesure de la tension délivrée par la sonde, caractérisé en ce que le générateur de courant délivre un courant prenant alternativement la valeur zéro et une valeur conduisant à un champ magnétique apte à provoquer la saturation magnétique d'une zone carburée, et en ce qu'il comprend un moyen relié au circuit de mesure et permettant de faire apparaître les deux valeurs différentes que la tension mesurée prend pour la valeur nulle et la valeur de saturation du second champ.

De toute façon, les caractéristiques et avantages de l'invention apparaîtront mieux après la description qui suit d'exemples de réalisation donnés à titre explicatif et nullement limitatif. Cette description se réfère à des dessins annexés sur lesquels :

la figure 1 représente le schéma synoptique d'un dispositif selon l'invention :

la figure 2 représente le schéma d'un générateur de courant de saturation utilisable dans l'invention.

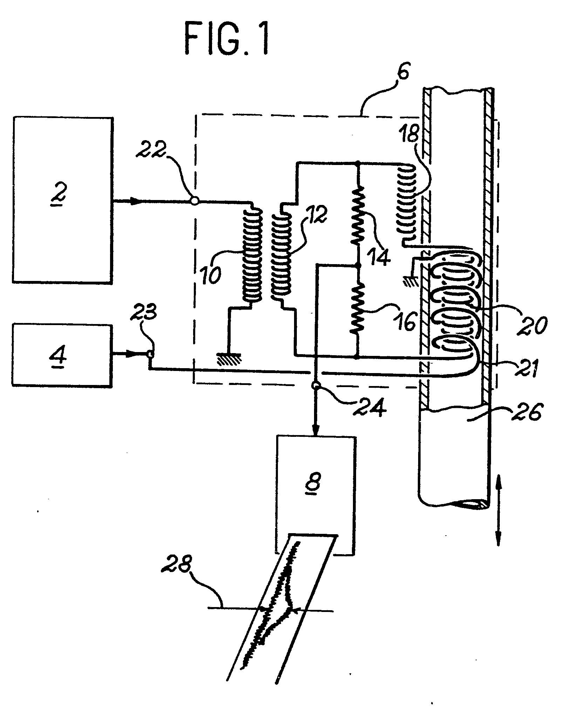

Le dispositif représenté sur la figure 1 comprend une source 2 de courant d'excitation, un générateur 4 de courant de saturation pulsé, relié à un enroulement 21, une sonde de mesure 6 et un enregistreur 8. Le circuit de mesure 6 est constitué par un premier enroulement 10 couplé à un second enroulement 12, et par un pont équilibré comprenant deux résistances 14 et 16 et deux inductances 18 et 20. Ce circuit de mesure possède deux entrées 22 et 23 reliées aux générateurs 2 et 4 et une sortie 24 reliée à l'enregistreur 8. Les enroulements 20 et 21 sont disposés à l'intérieur du tube 26 à contrôler.

Lors de la mesure absolue, le tube à contrôler 26 passe autour des enroulements 20 et 21, l'enroulement 18 étant tenu à l'écart de celui-ci. Lorsque le tube présente un défaut, le pont se trouve déséquilibré et le défaut mis en évidence par l'enregistreur 8, selon un processus connu.

Lorsque le tube à contrôler 26 comprend une zone carburée, l'alternance de courant de saturation dans l'enroulement 21 provoque un dédoublement 28 de l'enregistrement délivré par l'enre- gistreur 8. La largeur de ce dédoublement est fonction de la carburation et sa longueur correspond à la longueur de la zone carburée (compte tenu de la vitesse de défilement de la pièce et de la vitesse de déroulement de l'enregistreur).

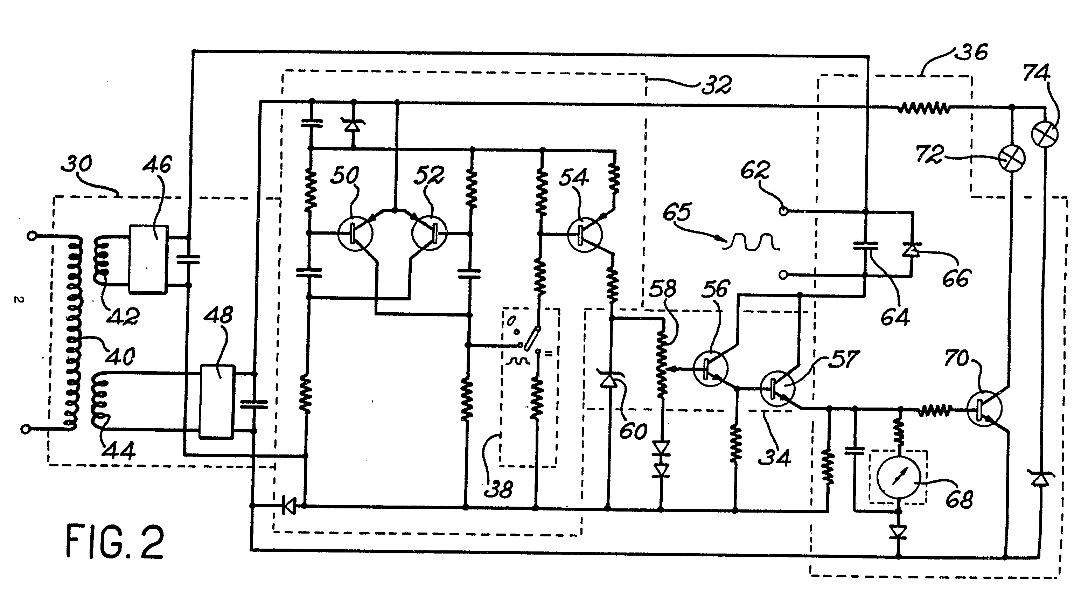

Bien que tout générateur de courant pulsé puissé convenir pour créer le courant de saturation, la figure 2 décrit un circuit qui permet de délivrer des créneaux de courant à flancs arrondis, ce qui évite les surtensions dans l'enroulement de mesure.

Le circuit représenté comprend un circuit d'alimentation 30, un oscillateur 32, un étage de puissance 34, un circuit de contrôle 36, un organe de commutation 38.

Le circuit d'alimentation 30 comprend un transformateur à enroulement primaire 40 et à deux enroulements secondaires 42 et 44 reliés respec- tivement à des redresseurs 46 et 48, lesquels fournissent des tensions continues de polarisation.

L'oscillateur 32 est constitué de manière classique par deux transistors 50 et 52 montés en bascule et par un transistor de sortie 54 attaqué sur sa base. Le collecteur de ce dernier constitue la sortie de l'oscillateur.

L'étage de puissance 34 comprend deux transistors 56 et 57, la base du premier étant reliée par un potentiomètre réglable 58 avec, en parallèle une diode Zener 60, au collecteur du transistor 54. Le collecteur du second est relié aux bornes de sortie 62 du circuit. Entre ces bornes sont insérés un condensateur 64 de filtrage et une diode 66. La forme de la tension délivrée est représentée par l'onde 65.

Le circuit de contrôle 36 comprend un ampèremètre 68, un transistor 70 et des voyants lumineux 72 et 74.

Enfin, l'organe de commutation 38 comprend un commutateur 76 à trois positions : 0, créneaux et continu.

Le circuit représenté peut délivrer sous 50 Ohms une tension rectangulaire de période 50 ms et d'amplitude 12 V, dont les flancs sont arrondis, ce qui évite l'apparition, dans l'enregistrement, de pics dus aux variations brutales de l'intensité du courant de saturation.

## Revendications

1. Procédé de contrôle non destructif de pièces par courants de Foucault, dans lequel on soumet une pièce à un premier champ magnétique alternatif obtenu en alimentant une sonde à enroulements par un courant d'excitation alternatif ayant une certaine fréquence et en disposant cette sonde à proximité de la pièce, on soumet ladite pièce à un second champ magnétique continu prenant alternativement deux valeurs différentes avec une fréquence qui est inférieure à la fréquence du courant d'excitation, on mesure la tension délivrée par la sonde et on détecte les deux valeurs différentes que prend cette tension pour les deux valeurs différentes du champ magnétique continu, caractérisé en ce qu'on applique ce procédé à la détection de zones carburées dans des pièces non magnétiques, les deux valeurs du champ magnétique continu étant égales l'une à une valeur nulle et l'autre à une valeur apte à provoquer la saturation magnétique d'une zone carburée, en ce qu'on déplace la sonde le long de la pièce à contrôler et en ce qu'on fait apparaître les deux valeurs différentes que prend la tension de mesure pour la valeur nulle et la valeur de saturation du second champ, ce qui permet de détecter la présence d'une zone carburée dans la pièce contrôlée.

2. Dispositif de contrôle non destructif de pièces par courants de Foucault, pour la mise en œuvre du procédé selon la revendication 1, ce dispositif comprenant une sonde (6) à enroulements disposée à proximité de la pièce (26), un circuit d'alimentation (2) de cette sonde en courant d'excitation alternatif ayant une certaine fréquence, la pièce étant ainsi soumise à un premier champ magnétique alternatif, un générateur (4) de courant délivrant un courant pouvant prendre alternativement deux valeurs différentes avec une fréquence inférieure à la fréquence du courant d'excitation, ce générateur étant relié à la sonde et permettant d'appliquer à la pièce un champ magnétique continu prenant alternativement deux valeurs différentes, un circuit de mesure (14, 16, 18, 20) de la tension délivrée par la sonde, caractérisé en ce que le générateur de courant délivre un courant prenant alternativement la valeur zéro et une valeur conduisant à un champ magnétique apte à provoquer la saturation magnétique d'une zone carburée, et en ce qu'il comprend un moyen (8) relié au circuit de mesure et permettant de faire apparaître les deux valeurs différentes que la tension mesurée prend pour la valeur nulle et la valeur de saturation du second champ.

## Claims

1. Process for the non-destructive testing of workpieces by eddy currents, in which a workpiece is exposed to an alternating first magnetic field obtained by supplying an alternating excitation current having a predetermined frequency to a sensor having coils, said sensor being disposed in proximity to the workpiece, said workpiece being exposed to a continuous second magnetic field which alternately has two different values at a frequency lower than that of the excitation current, the potential of the sensor is measured thereby detecting two different values for this potential resulting from the two different values of the continuous magnetic field, characterized in that said process is applied to the detection of carburised zones in non-magnetic workpieces, one of the two values of the continuous magnetic field being a null value, and the other having a value adapted to produce magnetic saturation in a carburised zone, and in that the sensor is displaced lengthways of the workpiece to be tested, and in that the two values of the measurement potential, for the null value and the saturation value of the second field, are displayed, thereby enabling detection of the presence of a carburised zone in the workpiece being tested.

2. Apparatus for the non-destructive testing of workpieces by eddy currents, for carrying out a process according to Claim 1, said apparatus comprising a sensor (6) having coils, located in proximity to a workpiece (26), a supply circuit (2) delivering an alternating excitation current of predetermined frequency to said sensor, the workpiece being thereby exposed to an alternating first magnetic field, a current generator (4) delivering a current alternating between two different values at a frequency lower than that of the excitation current, said generator being connected to the sensor enabling the workpiece to be exposed to a continuous magnetic field alternately having two different values, and a measurement circuit (14, 16, 18, 20) for the potential of the sensor, characterized in that the current generator delivers a current having alternately a zero value and a value providing a magnetic field adapted to produce magnetic saturation of a carburised zone, and in that it comprises a display means (8) connected to the measurement circuit and enabling the display of the two different values of the measured potential corresponding to the null value and the saturation value of the second field.

## Ansprüche

1. Verfahren zur zerstörungsfreien Prüfung von Teilen mittels Foucault-Strömen, bei dem ein Teil einem ersten Wechsel-Magnetfeld ausgesetzt wird, das man durch Speisung eines Wicklungen aufweisenden Fühlers mit einem Erregungswechselstrom mit einer bestimmten Frequenz erhält, wobei diese Sonde nahe dem Teil angeordnet wird, bei dem das Teil einem zweiten Gleich-Magnetfeld ausgesetzt wird, welches abwechselnd zwei unterschiedliche Werte mit einer Frequenz annimmt, welche kleiner als die Frequenz des Erregungsstromes ist, bei dem die von dem Fühler abgegebene Spannung gemessen wird und bei dem die zwei unterschiedlichen Werte festgestellt werden, welche diese Spannung für die zwei unterschiedlichen Werte des Gleich-Magnetfeldes annimmt, dadurch gekennzeichnet, daß dieses Verfahren zum Feststellen von gekohlten Bereichen in nichtmagnetischen Teilen verwandt wird, daß einer der zwei Werte des Gleich-Magnetfeldes einen Wert Null und der andere einen Wert aufweist, der die magnetische Sättigung eines gekohlten Bereiches hervorrufen kann, daß der Fühler längs des zu prüfenden Teiles bewegt wird, und daß die zwei unterschiedlichen Werte, welche die Meßspannung für den Wert Null und den Sättigungswert des zweiten Feldes annimmt, angezeigt werden, wodurch das Vorhandensein eines gekohlten Bereiches in dem zu prüfenden Teiles festgestellt werden kann.

2. Vorrichtung zum zerstörungsfreien Prüfen von Teilen mittels Foucault-Strömen, zur Durchführung des Verfahrens nach Anspruch 1, wobei die Vorrichtung umfaßt einen Wicklungen aufweisenden Fühler (6), welcher nahe dem Teil (26) angeordnet ist, einen Versorgungsschaltkreis (2) für diesen Fühler mit einem eine gewisse Frequenz aufweisenden Wechselerregungsstrom, wobei das Teil somit einem ersten Wechsel-Magnetfeld ausgesetzt wird, eine Stromgenerator (4) zum Erzeugen eines Stromes, welcher abwechselnd mit einer kleineren Frequenz als die Frequenz des Erregungsstromes zwei unterschiedliche Werte annehmen kann, wobei dieser Generator mit dem Fühler verbunden ist und das Anlegen eines Gleich-Magnetfeldes, welches abwechselnd zwei unterschiedliche Werte annimmt, an das Teil ermöglicht, und einen Meßschaltkreis (14, 16, 18, 20) für die von dem Fühler erzeugte Spannung, dadurch gekennzeichnet, daß der Stromgenerator einen Strom erzeugt, welcher abwechselnd den Wert Null und einen zu einem Magnetfeld führenden Wert annimmt, mit dem die magnetische Sättigung eines gekohlten Bereiches bewirkbar ist, und daß eine mit dem Meßschaltkreis verbundene Einrichtung (8) vorgesehen ist, mit der die zwei unterschiedliche Werte anzeigbar sind, welche die gemessene Spannung für den Wert Null und den Sättigungswert des zweiten Feldes annimmt.

# FIG.1

FIG.2

0 023 456